# EUROPEAN PATENT APPLICATION

(11) **EP 4 759 116 A1**
(43) Date of publication of application: **17.06.2026**
(21) Application number: 25213239.4
(22) Date of filing: 04.11.2025
(51) Int. Cl.: A01D 41/12

(54) **MONITORING CROP IN A CROP BIN**

(30) Priority: 10.12.2024 GB 202418109
(71) Applicant: AGCO International GmbH, 8212 Neuhausen am Rheinfall (CH)
(72) Inventor: CHRISTIANSEN, Martin Peter, 8930 Randers (DK); LAURSEN, Morten Stigaard, 8930 Randers (DK); TARRAGONA, Ramon Buchaca, 8930 Randers (DK); KORSGAARD, Steffen, Randers (DK); HERMANN, Dan, DK-8930 Randers NØ (DK); BILDE, Morten, DK-8930 Randers NØ (DK)
(74) Representative: AGCO Intellectual Property Department

(57) **Abstract**

A mechanism for predicting a volume of crop stored by a crop bin of a harvesting machine. The crop bin has a variable interior shape. A crop volume determining system produces shape information, responsive to changes in the variable interior shape of the crop bin, and crop level information, responsive to a crop level within the crop bin. The crop volume processing system processes the shape information and the crop level information to predict the volume of crop.

## Description

### FIELD

Embodiments of the present disclosure relate generally to monitoring crop stored by a crop bin of a harvesting machine.

### BACKGROUND

There is an increasing use and reliance upon agricultural machines to perform agricultural tasks within an agricultural environment. In particular, there is an increasing usage of harvesting machines, such as combine harvesters, (root) vegetable harvesters, berry harvesters or the like.

A harvesting machine may comprise a crop bin for storing harvested crops. For instance, where the harvesting machine is a combine harvester, the crop bin may be a grain bin for storing harvested grain. As another example, the harvesting machine may be designed to harvest root vegetables that can be stored in a vegetable bin. Other examples will be readily apparent to the skilled person.

It is known for a harvesting machine to monitor the amount of crop stored by in the crop bin of the harvesting machine. Typically, this is performed by monitoring, at discrete positions within the crop bin, whether or not the level of the crop exceeds each discrete position. This provides useful information for an operator of the harvesting machine to determine whether and/or when the crop bin needs to be emptied.

There is an ongoing demand to improve and supplement the information concerning the amount of crop stored by a crop bin of the harvesting machine. This would be useful to prevent or reduce a risk of crop spillage (e.g., due to overfilling of the crop bin) and/or to monitor harvest quantity and quality.

### BRIEF SUMMARY

The invention is defined by the claims.

In accordance with a proposed approach, there is provided a harvesting machine.

The harvesting machine includes a crop bin for storing harvested crop, wherein the crop bin has a variable interior shape.

The harvesting machine also includes a crop volume determining system for determining a volume of crop stored by the crop bin. The crop volume determining system comprises a bin shape sensing arrangement configured to generate shape information that changes responsive to changes in the interior shape of the crop bin, a crop level sensing arrangement configured to generate crop level information that changes responsive to a level of crop within the crop bin, and a processing system configured to process the shape information and the crop level information to predict a volume of crop stored by the crop bin.

The present disclosure provides a harvesting machine with a crop bin having a variable interior shape and a crop volume determining system. The crop volume determining system is configured to predict the volume of crop stored by the crop bin, taking into account the variability of the shape (e.g., geometry and/or size) of the interior of the crop bin.

It is herein recognized that, by itself, a crop level within the bin may not be sufficiently accurate for assessing or indicating an amount of crop stored in the crop bin, particularly if the shape of the crop bin changes with different volumes and/or weights of crop contained therein. This makes determining a closeness to maximum capacity a challenge, which could lead to overfilling (and thereby spilling) of crop in the crop bin. By determining shape information and determining a volume of the stored crop using the shape information, a more accurate indication of the amount of crop stored in the bin can be predicted or determined.

In some embodiments, the crop bin comprises one or more side walls that move with a change in the interior shape of the crop bin, and the shape information changes responsive to changes in the position of each side wall. Crop bins with one or more moveable sidewalls are well established and familiar to the skilled person in the art, particularly for use with combine harvesters. Monitoring the position(s) of each side wall thereby facilitates determination of shape information that will effectively track the effect or influence of different volume(s) and/or weight(s) of crop on the interior shape of the crop bin.

In some embodiments, each of the one or more side walls comprises a bottom edge and a top edge, wherein each side wall is configured to pivot about the bottom edge with a change in the interior shape of the crop bin, and the shape information changes responsive to a change in angle of each side wall. By monitoring the angle of each side wall, it is possible to track changes in the interior shape of the crop bin to facilitate more precise crop volume calculations.

In some embodiments, the bin shape sensing arrangement comprises at least one angle sensor for monitoring the angle of each side wall. Incorporating angle sensors enables real-time tracking of side wall position(s), for more accurate and responsive volume predictions.

In some embodiments, each of the one or more side walls is configured to change position responsive to the volume of grain stored by the crop bin.

In some embodiments, the crop level sensing arrangement comprises a time-of-flight sensing arrangement comprising a signal emitter configured to emit an acoustic and/or electromagnetic signal into crop stored by the crop bin, a monitoring device configured to monitor for one or more echoes or responses to the acoustic and/or electromagnetic signal, and a signal processing device configured to generate the crop level information responsive to a time difference between emission of the acoustic and/or electromagnetic signal and receipt of each of the one or more echoes or responses to the acoustic and/or electromagnetic signal.

The time-of-flight sensing arrangement provides a reliable mechanism for measuring crop levels.

In some embodiments, the echoes or responses comprises an echo from an interface between the crop and air. Detecting the crop-air interface allows for precise identification and measurement of the crop surface, for accurate determination of crop level and therefore more accurate volume calculations.

In some embodiments, the time-of-flight sensing arrangement comprises a plurality of signal reactive devices positioned at different potential crop levels within the crop bin, wherein each signal reactive device is configured to, responsive to receiving the acoustic and/or electromagnetic signal, generate and emit a respective response signal into the crop stored by the crop bin, and the monitoring device is configured to monitor for a response signal from each signal reactive device.

This multi-point sensing system provides detailed crop level information throughout the bin. The ability to detect crop levels at various points facilitates the determination of a surface shape of the crop bin, for more accurate determination of the overall crop shape and therefore crop volume.

In some embodiments, the harvesting machine further comprises a first alert system configured to store maximum capacity information identifying a maximum possible capacity of the crop bin, and generate first alert information responsive to a difference between the maximum possible capacity, identified by the maximum capacity information, and the predicted volume of crop stored by the crop bin.

The first alert system helps prevent overfilling of the crop bin. By providing timely alerts based on remaining capacity, an operator can be alerted to or otherwise made aware of problematic crop volumes and thereby reduces the risk of crop spillage.

In some embodiments, the harvesting machine further comprises a crop shape determining system configured to process the shape information to predict a shape of an interior volume of the crop bin, and process the predicted shape of the interior volume of the crop bin and the predicted volume of crop stored by the crop bin to predict a shape of the crop stored by the crop bin.

The crop shape determining system provides information into the distribution of crop within the bin, which is usable for controlling or repositioning a filling element for the crop bin and/or reducing a risk of crop spillage (e.g., if the crop is tilted or piling towards a particular side of the crop bin).

In some embodiments, the harvesting machine further comprises an acceleration recommendation system configured to process the predicted shape of the crop stored by the crop bin and the predicted shape of the interior volume of the crop bin to generate a recommended maximum acceleration and/or deceleration of the harvesting machine.

The acceleration recommendation system enhances operational safety and reduces a risk of crop spillage. In particular, by taking the shape of the crop and the interior volume into account, it is possible to track or identify an acceleration/deceleration that might otherwise cause the crop to spill out of the interior volume.

In some embodiments, the crop shape determining system further comprises a tilt monitoring system configured to monitor a tilt of the harvesting machine, and the crop shape determining system is configured to process the monitored tilt of the harvesting machine, the predicted shape of the interior volume of the crop bin and the predicted volume of crop stored by the crop bin to predict the shape of the crop stored by the crop bin. Incorporating tilt monitoring into crop shape predictions enhances accuracy in determining the shape of the crop, particularly on uneven or sloped terrain.

In some embodiments, the harvesting machine further comprises a second alert system configured to generate second alert information responsive to a proximity of uppermost bounds of the predicted shape of the crop stored by the crop bin to uppermost bounds of the predicted shape of the interior volume of the crop bin. The second alert system is effectively able to provide a warning of the crop bin approaching full capacity. This system is thereby able to assist an operator to define an appropriate harvesting pace and unloading timing, reducing downtime and improving overall harvesting efficiency.

In some embodiments, the harvesting machine is a combine harvester. The proposed approach is particularly advantageous when employed with a combine harvester, as such harvesting machines commonly have a crop bin with a variable interior shape.

There is also provided a method for determining a volume of crop stored by the crop bin having a variable interior shape. The method includes generating, using a bin capacity sensor, shape information that changes responsive to changes in the interior shape of the crop bin, generating, using a crop level sensor, crop level information that changes responsive to a level of crop within the crop bin, and processing the capacity information and the crop level information to predict a volume of crop stored by the crop bin.

### BRIEF DESCRIPTION OF THE DRAWINGS

One or more embodiments of the invention / disclosure will now be described, by way of example only, with reference to the accompanying drawings, in which:
FIG. 1 illustrates a harvesting machine;
FIG. 2 illustrates a portion of a proposed harvesting machine;
FIG. 3 illustrates a crop level sensing arrangement;
FIG. 4 illustrates another crop level sensing arrangement; and
FIG. 5 illustrates optional elements for a proposed harvesting machine.

### DETAILED DESCRIPTION

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

This disclosure relates to a mechanism for predicting a volume of crop stored by a crop bin of a harvesting machine. The crop bin has a variable interior shape. A crop volume determining system produces shape information, responsive to changes in the variable interior shape of the crop bin, and crop level information, responsive to a crop level within the crop bin. The crop volume processing system processes the shape information and the crop level information to predict the volume of crop.

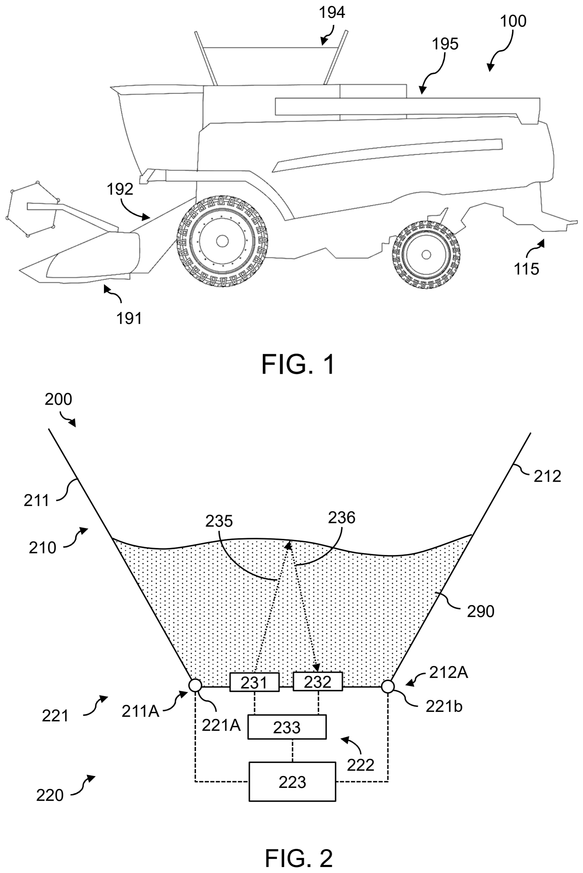

FIG. 1 illustrates a harvesting machine 100 in which proposed embodiments may be employed, for the sake of improved contextual understanding. The harvesting machine 100 is here embodied as a combine harvester, although embodiments are not restricted thereto.

The combine harvester 100 is coupled to a header 191 which is operable, in use, to cut and gather a strip of crop material as the combine harvester 100 is driven across a field or area to be harvested during a harvesting operation. A conveyor section 192 conveys the cut crop material from the header 191 into a crop processing apparatus (not visible in FIG. 1) operable to separate grain and non-grain (i.e., material other than grain (MOG) or residue material (used interchangeably herein)). It is noted here that apparatus for use in a combine harvester to separate grain and non-grain material are well-known in the art and the present invention is not limited in this sense. The skilled person will appreciate that numerous different configurations for the crop processing apparatus may be used as appropriate. Clean grain separated from the cut crop material is moved by a grain elevator (not visible in FIG. 1) into a crop bin 194.

An alternative label for a crop bin, particularly in the context of a combine harvester, is a "grain bin", which may be used interchangeably.

The crop bin 194 may be periodically emptied, e.g., into a collection vehicle, storage container, etc. utilizing an unloading auger 195.

Remaining non-grain material (MOG) / residue material is separately moved to a spreader tool 115 which is operable in use to eject the non-grain material or MOG from the rear of the combine harvester 100 and onto the ground. It will be appreciated that in some embodiments the combine harvester 100 may also include a chopper tool positioned, for example, between the crop processing apparatus and the spreader tool 115 and operable, in use, to cut the residue material before it is spread by the spreader tool 115.

It would be advantageous to generate a prediction or measurement of the volume of crop stored by the crop bin 194. This volume may, for instance, be monitored to identify when a desired amount of crop has been harvested, to identify when the crop bin is nearing maximum capacity, to determine a size of a collection vehicle or other storage container for receiving the crop and so on.

One possible approach to predicting a crop volume is to determine or measure a crop level in the crop bin. The value of the crop level may then be mapped to an expected crop volume (at the crop level).

As used herein, the term "crop level" may refer to the height or vertical position of the upper surface of the crop stored within the crop bin or storage container of a harvesting machine. This is expressible as a relative distance (such as a ratio, percentage or fraction), which may be relative to an assumed height of the crop bin, or an absolute distance (e.g., from the base of the crop bin or a top of the crop bin). Alternative labels for crop level include "crop fill level" and "fill level", which may be used interchangeably.

The present disclosure recognizes that the interior shape of a crop bin may not be consistent, i.e., is variable. In some scenarios, the interior shape of the crop bin may be controlled independently of the crop stored by the crop bin, e.g., responsive to a user input or manual manipulation of the crop bin to define the interior shape of the crop bin. In some scenarios, the interior shape of the crop bin may change responsive to a weight and/or volume of crop pressing against the bounds of the crop bin.

The variation in the interior shape of the crop bin may be an intentional feature of the crop bin design (e.g., to allow the crop bin to expand to accommodate additional crop). However, this is not essential.

Based on this recognition, it has been observed that simply mapping a crop level to an expected crop volume will be inaccurate, as any variation in the shape of the interior volume of the crop bin will affect the relationship between crop level and volume. More particularly, any variation in the shape of the interior volume of the bin that is not solely attributable to crop level or crop volume (e.g., crop weight or manual control of the shape of the interior volume) will affect the relationship between crop level and volume. As such, the crop level within the crop bin does not necessarily provide useful information about a volume of material contained in the crop bin.

The present disclosure proposes to exploit the above recognitions to provide a more accurate determination of the crop volume stored by the crop bin.

Proposed approaches may be employed in any form of harvesting machine, such as a combine harvester (e.g., as illustrated in FIG. 1), a forage harvester, mower, cotton harvester, fruit picker, root vegetable picker, or windrower. In all such harvesting devices, a crop bin stores crop harvested by the harvesting machine.

FIG. 2 provides an illustrative example of a portion 200 of a proposed harvesting machine, which comprises a crop bin 210 and a crop volume determining system 220.

The crop bin 210 is configured for storing harvested crop 290, and has a variable interior shape.

In the illustrated example, the crop bin 210 comprises one or more side walls 211, 212 (here: only two side walls are illustrated) that move with a change in the interior shape. Thus, each of the one or more side walls may be configured to change position responsive to the volume of grain stored by the crop bin.

In the illustrated example, each side wall 211, 212 defines a bottom edge 211A, 212A about which it pivots with a change in the interior shape of the crop bin. More specifically, as the amount of harvested crop 290 in the crop bin increases, the harvested crop will apply outward pressure against the side wall(s), which may cause the side walls to pivot about their bottom edges to thereby change the interior shape of the crop bin. The amount of pivoting performed by the side walls will, of course, at least partially depend upon the weight/density of the harvested crop (and therefore the magnitude of the outward pressure).

However, other examples of crop bins with a variable interior shape are envisaged and would be apparent to the appropriately skilled person.

For instance, the side walls of the crop bin may be formed from an elastic material that bulges as harvested crop applies outward pressure thereagainst, resulting in a change to the interior shape (and also a change in the capacity) of the crop bin.

As another example, each of the one or more side walls is configured to change position responsive to the volume of grain stored by the crop bin.

As another example, the crop bin may include adjustable panels or sections that can be manually or automatically reconfigured to alter the interior shape and capacity of the crop bin. For instance, the crop bin may have expandable or collapsible sections that can increase or decrease the overall volume as needed.

The crop volume determining system 220 is configured to determine a volume of crop stored by the crop bin. The crop volume determining system 220 comprises a bin shape sensing arrangement 221, a crop level sensing arrangement 222 and a processing system 223.

The bin shape sensing arrangement 221 is configured to generate shape information that changes responsive to changes in the interior shape of the crop bin. Thus, as the interior shape of the crop bin changes, so the shape information correspondingly changes. By way of example only, the shape information may include data on the positions, angles, or dimensions of any side walls, panels, or other adjustable components of the crop bin.

In the context of the present disclosure, the "interior shape" of the crop bin may be defined by geometry (e.g., contours) and dimensions of the (inner) side walls, floor, and (if present) ceiling that bound the interior volume of crop bin in which harvested crop is stored.

In some examples, the bin shape sensing arrangement may comprise one or more sensors or sensing arrangements such as angle sensors, position sensors, or strain gauges to detect changes in the interior shape of the crop bin.

For instance, for the illustrated example, the bin shape sensing arrangement 221 comprises at least one angle sensor 221A, 222B for monitoring the angle of each side wall. Thus, the shape information comprises an angle measured or monitored by each angle sensor. Thus, as the angle of each side wall changes (e.g., pivots responsive to an increasing volume of crop), so the shape information (specifically, each angle indicated in the shape information) will change.

Suitable examples of angle sensors are well known to the skilled person, such as a rotary encoder or an inclinometer.

As another example, an angle sensor for a side wall may, for instance, comprise a magnet-sensor pair (e.g., comprising a magnet and a Hall effect sensor) positioned at different locations on the side wall and a fixed reference point. As the side wall pivots, the relative position of the magnet and sensor changes, allowing the angle to be measured.

The crop level sensing arrangement 222 is configured to generate crop level information that changes responsive to a level of crop within the crop bin.

As a working example, the crop level sensing arrangement 222 may comprise a signal emitter 231 configured to emit an acoustic and/or electromagnetic signal 235 into crop stored by the crop bin; a monitoring device 232 configured to monitor for one or more echoes or responses 236 to the acoustic and/or electromagnetic signal; and a signal processing device 233 configured to generate the crop level information responsive to a time difference between emission of the acoustic and/or electromagnetic signal and receipt of each of the one or more echoes or responses to the acoustic and/or electromagnetic signal.

Appropriate techniques that may be performed by a time-of-flight arrangement are well known to the skilled person.

By way of example, the signal emitter 231 may include a timing mechanism that records the exact time (e.g., in the form of a first timestamp) of when the acoustic or electromagnetic signal is emitted. The monitoring device 232 may then record the time (e.g., in the form of a second timestamp) of when each echo or response is received. By comparing these timestamps, the signal processing device 233 can calculate the time difference and thus determine the distance traveled by the signal, which corresponds to the crop level.

As another example, phase shifts may be utilized by emitting, using the signal emitter, a continuous wave signal and analyzing the phase difference between the emitted and received signals. As the crop level changes, the phase shift will vary proportionally. The signal processing device 233 may be configured to interpret these phase shifts and correlate them to specific crop levels within the bin.

The echoes or responses (monitored by the monitoring device) may comprise an echo from an interface between the crop and air ("air-crop interface"). This facilitates accurate identification of the crop level without the need for any active devices or elements to respond to the emitted acoustic and/or electromagnetic signal and/or the provision of any passive element to be monitored by the monitoring device.

In the illustrated example, the signal emitter (and monitoring device) are positioned in/on a bottom, floor or base of the crop bin. In this way, the emitted acoustic and/or electromagnetic signal(s) propagate though any crop in the crop bin.

This placement provides for accurate detection of the crop-air interface at any crop level. In particular, by being fixed to the bottom of the crop bin, the signal emitter and monitoring device maintain a consistent reference point for measurements, regardless of changes in the interior shape of the crop bin. This configuration thereby facilitates more precise and reliable crop level sensing, as the distance between the signal emitter (or monitoring device) and the air-crop interface can be accurately measured even as the bin's shape changes.

Moreover, locating these components at the bottom/base of the bin helps protect them from potential damage or interference that could occur if they were positioned at the top of the bin, e.g., where they might be exposed to crop during any filling operation of the crop bin.

In an alternative example, the signal emitter (and monitoring device) are positioned at or near the top of the crop bin, emitting signals downward towards the crop surface. In this arrangement, the signal emitter and monitoring device may be protected from direct contact with the crop by being mounted above the maximum crop level of the bin.

Alternative examples of suitable crop level sensing arrangements are provided later in this disclosure.

The processing system 223 is configured to process the shape information and the crop level information to predict a volume of crop stored by the crop bin.

As a simple working example, the processing system may be configured to map the shape information and crop level information to a predicted volume of crop. This mapping process may comprise using a lookup table or a mathematical model that correlates specific combinations of bin shape information (e.g., side wall angle(s)) and crop level information to corresponding crop volumes. For instance, the processing system may maintain a database of pre-calculated volumes for various combinations of shape information and crop level information, allowing for volume estimation by matching the available information to the pre-calculated volume of the closest combination.

As another example, the processing system may process the shape information to construct a three-dimensional (digital) model of the interior volume of the crop bin ("bin model"), e.g., in a model space. The processing system may then use the bin model and the crop level information to determine the portion of the interior volume (represented by the bin model) that is filled with crop. For instance, the processing system may use the crop level information to identify the level of the interior volume, within the model space, that is reached by the crop. In the example in which the crop level information comprises a predicted distance between the air-crop interface and a base of the crop bin, this can be performed by identifying a surface that lies at the predicted distance from the representation of the base of the crop bin in the bin model. The processing system may then determine the volume of the crop to be the volume bound by the walls of the crop bin (defined by the bin model) and this identified surface.

Approaches for processing shape information to produce a bin model (i.e., predict the shape of the interior volume of the crop bin) would be readily apparent to the skilled person.

As a working example, the processing system may use a predefined geometric model or template ("base model") that is adjusted to produce the bin model based on the shape information. For instance, if the crop bin has a known basic shape (e.g. rectangular prism, trapezoidal prism, frustrum, cylinder), the processing system may start with the base model and modify its dimensions or geometry according to the current shape information to produce the bin model. As an example, if the shape information indicates an angle of one or more side walls, then the corresponding representation of the side wall(s) of the base model may be modified to reflect the angle of the side wall(s) in the shape information.

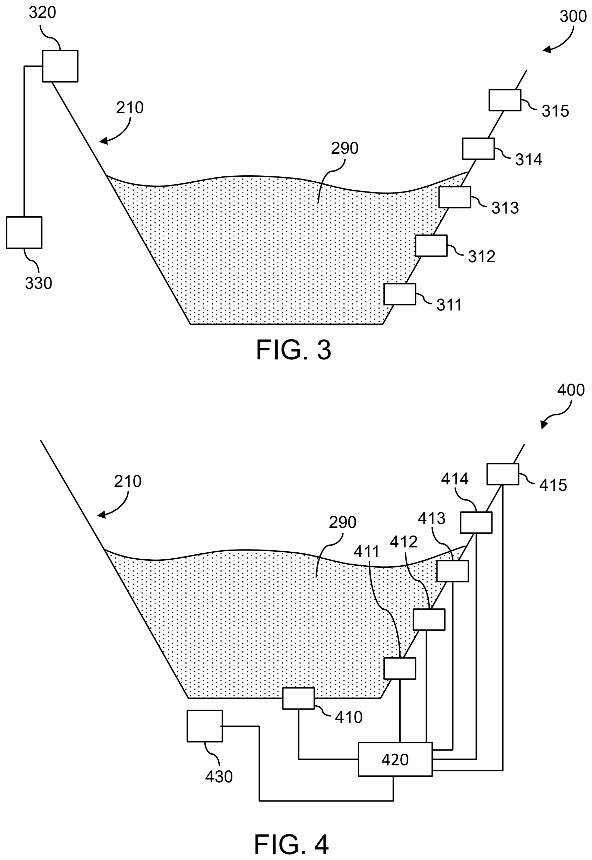

FIG. 3 illustrates an alternative example of a crop level sensing arrangement 300 for use with a crop bin 210.

In this example, the crop level sensing arrangement 300 comprises a plurality of markers 311, 312, 313, 314, 315, each positioned at a different potential crop level for the crop bin 210. Thus, each marker is associated with a different potential crop level. It will be understood that, as the crop material fills the crop bin, the crop material will progressively cover these markers from bottom to top.

The crop level sensing arrangement 300 further comprises a marker sensing arrangement 320 configured to produce marker information that identifies each exposed marker (i.e., identify which marker(s) is/are not covered by crop material in the crop bin). Thus, the marker sensing arrangement 320 is designed to detect which markers remain exposed above the crop level.

The crop level sensing arrangement 300 further comprises a processing module 330 configured to process the marker information to produce the crop level information. In particular, the processing module may indicate or identify the lowest potential crop level associated with any one of the exposed markers identified in the marker information.

By identifying the lowest exposed marker, the processing module can infer that the crop level lies between this marker and the next lower (covered) marker. This method provides a discrete, stepwise measurement of the crop level, with the resolution determined by the spacing between markers.

In some examples, each marker 311, 312, 313, 314, 315 comprises a signal reactive device, such as an RFID tag or similar. Each signal reactive device is configured to, responsive to receiving the acoustic and/or electromagnetic signal, generate and emit a respective response signal into the crop stored by the crop bin. In such examples, the monitoring device is configured to monitor for a response signal from each signal reactive device

By way of example, each marker may comprise an RFID tag. The marker sensing arrangement will generate an electromagnetic signal to interrogate any exposed RFID tag, each of which will respond in kind with a response containing identifying information. The marker sensing arrangement is configured to monitor for any such responses to identify any exposed RFID tags (and therefore markers). The marker sensing arrangement 320 may correspondingly comprise an RFID tag reader configured to read any exposed RFID tag(s) to thereby generate the marker information.

Other suitable examples of signal reactive devices that may be employed will be readily apparent to the skilled person.

For instance, the signal reactive devices may comprise reflectors or retroreflectors that reflect an electromagnetic signal (e.g., light or laser signals) back to an optical sensor (functioning as the monitoring device). The marker sensing arrangement may thereby emit light signals and detect reflections from exposed markers to determine the crop level.

As another example, each signal reactive device may comprise a resonant circuit tuned to specific frequencies. When exposed, each resonant circuit may respond to an electromagnetic signal produced by the crop level sensing arrangement by resonating at their characteristic frequency to produce a return electromagnetic signal, which can be detected by the monitoring device.

It has been previously mentioned how the processing model may process a bin model (that represents the interior volume of the crop bin) and the crop level information to predict the volume of the crop stored by the crop bin.

In such examples, each marker may be mapped to or otherwise associated with a respective predetermined position (i.e., coordinate or location) in the bin model. The predetermined positions effectively correspond to the actual physical locations of the markers within the real crop bin.

When the marker sensing arrangement identifies the lowest exposed marker in the crop level information, the processing system may use this information to set the predicted level of the crop with respect to the bin model. Specifically, the predicted crop level may be set to the predetermined position of the lowest exposed marker in the bin model. For example, if the lowest exposed marker is determined to be a marker positioned X meters above the bin floor, the processing system may set the predicted crop level to X meters in the bin model. The volume of crop can then be derived or predicted using a previously described approach.

FIG. 4 illustrates an alternative example of a crop level sensing arrangement 400.

In this example, the crop sensing arrangement comprises a first capacitive plate 410 and a plurality of second capacitive plates 411, 412, 413, 414, 415 positioned at different potential crop levels in the crop bin. In operation, the first capacitive plate 410 acts as a reference plate, while the second capacitive plates 411, 412, 413, 414, 415 function as sensing plates. As the crop material fills the crop bin, the crop material alters the dielectric properties between the first capacitive plate and the second capacitive plates, causing changes in capacitance.

The crop level sensing arrangement 400 may thereby include circuitry 420 to measure the capacitance between the first capacitive plate 410 and each of the second capacitive plates 411, 412, 413, 414, 415. As the crop level rises, it may progressively cover the second capacitive plates from bottom to top, changing the measured capacitance for each covered plate.

The crop level sensing arrangement may comprise a processing module 430 configured to process the capacitance measurements to determine which of the second capacitive plates are covered by crop material and which remain exposed. This information may be used to infer the current crop level within the bin.

Other suitable examples of crop level sensing arrangements will be readily apparent to the skilled person, which may be employed depending upon the nature of the crop bin.

For instance, in some examples, the crop bin may include a flexible membrane or bladder that expands or contracts to accommodate varying crop volumes. The bin shape sensing arrangement may comprise one or more pressure sensors to detect changes in the membrane's shape and volume and thereby generate the shape information.

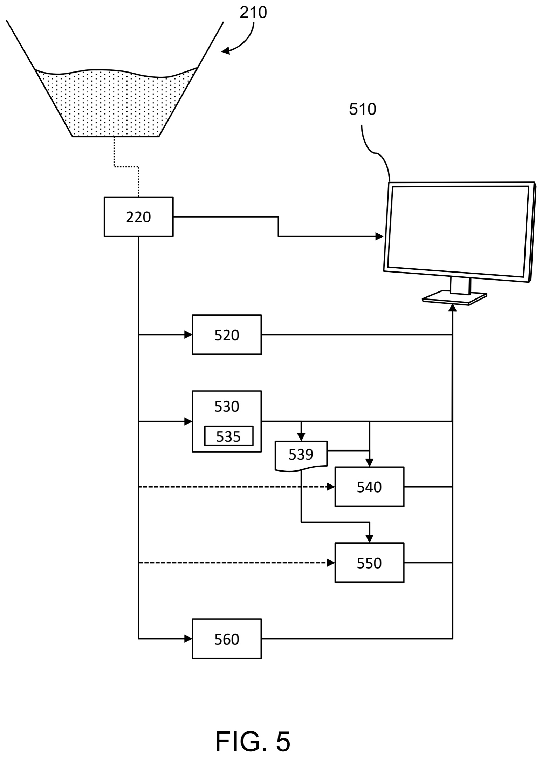

FIG. 5 illustrates a portion of a proposed harvesting machine comprising one or more further optional elements that may be employed. The harvesting machine comprises the crop bin 210 and the crop volume determining system 220 which may be embodied as previously described. Continued reference will be made, where relevant, to elements illustrated in FIG. 2.

In some examples, the harvesting machine further comprises an output user interface 510, such as a screen or display. The output user interface 510 may, for instance, be positioned in a cabin of the harvesting machine or otherwise near a human support (e.g., a seat) of the harvesting machine.

The output user interface 510 may be controlled to provide one or more user-perceptible outputs responsive to the predicted volume of crop stored by the crop bin.

By way of example, the processing system 223 of the crop volume determining system 220 may be configured to control the output user interface 510 to provide a user-perceptiple output (e.g., a visual representation) of the predicted volume of crop stored by the crop bin. This allows the operator to make informed decisions during the harvesting process.

In some examples, the harvesting machine further comprises a first alert system 520 configured to store maximum capacity information identifying a maximum possible capacity of the crop bin. This may, for instance, be stored in a memory or storage unit of the harvesting machine. The maximum capacity may effectively represent the upper limit of crop volume that can be safely held in the crop bin, which may take into account factors like the crop bin's dimensions and structural limitations.

The first alert system 520 of the harvesting machine may be further configured to generate first alert information responsive to a difference between the maximum possible capacity, identified by the maximum capacity information, and the predicted volume of crop stored by the crop bin. By way of example, the first alert system may be configured to control the first alert information to indicate whether or not a difference between the maximum possible capacity and the predicted volume of crop falls below a predetermined threshold.

The first alert system 520 may be configured to control the output user interface 510 (when present) to provide a user-perceptible output of the first alert information. For instance, the first alert system 520 may control the output user interface 510 to indicate whether or not the difference falls below the predetermined threshold.

In some examples, the first alert system 520 may use a plurality of different thresholds to provide more granular information about the crop volume in the bin. These thresholds may correspond to different crop levels or percentages of the maximum capacity. For example, the system may employ a series of thresholds such as 25%, 50%, 75%, and 90% of the maximum capacity. As the predicted volume of crop approaches or exceeds each threshold, the system may generate different types of alerts or notifications, e.g., via the output user interface 510.

In some examples, the harvesting machine further comprises a crop shape determining system 530 configured to process the shape information to predict a shape of an interior volume of the crop bin; and process the predicted shape of the interior volume of the crop bin and the predicted volume of crop stored by the crop bin to predict a shape of the crop stored by the crop bin.

A portion of the crop shape determining system may be formed as an aspect of the processing system 223 (of the crop volume determining system 220), particularly to predict the shape of the interior volume of the crop bin. Previous embodiments have described how this information can be exploited in the generation of the shape information. However, in other embodiments, the crop shape determining system is a standalone element or system.

The crop shape determining system is configured to process the predicted shape of the interior volume and predicted volume of crop, to predict the shape of the crop.

In a simple example, this can be performed by modelling the predicted shape of the interior volume as a virtual container (e.g., represented by the bin model previously disclosed) and filling it with the predicted volume of crop from the bottom up. In some variants, this process may involve simulating the natural settling behavior of the crop material, e.g., using granular physics techniques or similar.

The shape of the crop may be determined by the intersection of the filled volume with the interior shape of the crop bin.

In more complex examples, additional data and/or sensor information may be employed to improve the prediction of the shape of the crop.

For instance, in some examples, the crop shape determining system 530 further comprises a tilt monitoring system 535 configured to monitor a tilt of the harvesting machine. Suitable examples of tilt monitoring systems are well known to the skilled person, such as inclinometers or accelerometers.

In such examples, the crop shape determining system 530 may be configured to process the monitored tilt of the harvesting machine, the predicted shape of the interior volume of the crop bin and the predicted volume of crop stored by the crop bin to predict the shape of the crop stored by the crop bin.

By way of example, where the predicted shape of the interior volume of the crop bin is represented by a bin model, then the crop shape determining system may conceptually incline this bin model by the monitored tilt. The bin model may then be virtually "filled" with the predicted volume of crop. As previously mentioned, this process may involve simulating the natural settling behavior of the crop material within the inclined bin model, e.g., using granular physics techniques or similar. The shape of the crop may then be determined by the intersection of the filled volume with the interior shape of the crop bin. In this way, the shape of the crop can be defined as a crop model, partially bounded by the bin model of the interior volume of the crop bin.

In some examples, the crop shape determining system 530 may be configured to control the output user interface 510 to display a visual representation of the predicted shape of the crop stored by the crop bin. This visual representation may take various forms to effectively communicate the crop shape to the operator.

For instance, the visual representation may take the form of a two-dimensional cross-sectional view of the crop bin, showing the predicted crop shape within the bin. As another example, the visual representation may take the form of a three-dimensional rendering of the crop shape within the bin, e.g., with a user-adjustable view. This 3D visualization may allow the operator to rotate or adjust the viewing angle to better understand the distribution of crop material within the bin.

In some implementations, the visual representation may overlay the predicted crop shape onto a representation of the bin's interior shape. This overlay would help the operator visualize how close the crop is to the bin's walls or upper limits.

In examples where the tilt of the harvesting machine is monitored, the crop shape determining system may control the output user interface to adjust the displayed crop shape to reflect the current tilt angle.

The harvesting machine may comprise an acceleration recommendation system 540 configured to process the predicted shape of the crop stored by the crop bin and the predicted shape of the interior volume of the crop bin to generate a recommended maximum acceleration and/or deceleration of the harvesting machine.

The acceleration recommendation system 540 may be embodied as a processing system or processing module, examples of which are later described.

The acceleration recommendation system 540 may, for instance, analyze or predict how the predicted crop shape will interact with the interior bin shape to determine safe acceleration and deceleration limits. In particular, the acceleration recommendation system may use one or more physics models to simulate how the crop shape would change or behave (within the interior bin shape) under different acceleration forces, and determine (for each acceleration force) whether or not the crop will breach or spill out of the interior bin shape (e.g., defined by the bin model), e.g., whether or not the crop shape would fit inside the interior bin shape.

It will be appreciated, as a working example, that if the predicted crop shape indicates the crop is piled high on one side of the bin, the acceleration recommendation system may recommend lower acceleration to reduce the risk of any shifting crop (due to the acceleration) from shifting and potentially spilling.

The acceleration recommendation system 540 may be configured to control the output user interface 510 to provide a user-perceptible output of the recommended maximum acceleration and/or deceleration values.

In some examples, the acceleration recommendation system may pass the recommended maximum acceleration and/or deceleration value(s) to a drive control system (not illustrated) of the harvesting machine. The drive control system may be configured to control the maximum acceleration and/or deceleration of the harvesting machine responsive to the recommendation(s), e.g., to set the maximum acceleration and/or deceleration to the recommended value.

The harvesting machine may further comprise a second alert system 550 configured to generate second alert information responsive to a proximity of uppermost bounds of the predicted shape of the crop stored by the crop bin (determined by the crop shape determining system 530) to uppermost bounds of the predicted shape of the interior volume of the crop bin.

The second alert system may be embodied as a processing system or processing module, examples of which are later provided.

The second alert system 550 may be configured to continuously or iteratively monitor the proximity between the uppermost bounds of the predicted crop shape (e.g., represented by a crop model) and the uppermost bounds of the predicted interior bin shape (e.g., represented by a bin model). This monitoring process may involve calculating the vertical distance between these two boundaries at edge points of the predicted interior bin shape, i.e., at points where the crop may overflow or spill out of the interior of the bin.

The second alert information may indicate a measure of (the shorted) distance between the uppermost bounds of the predicted crop shape and the predicted interior volume shape.

In other examples, the second alert system may define one or more threshold distances to trigger different levels of alerts. The second alert information may indicate which (if any) of the threshold(s) is/are breached. For example, a first threshold may define when the crop shape comes within a certain distance of the bin's upper bounds. A second, smaller threshold may indicate a greater alert state as the crop shape approaches closer to the bin's upper limits.

In some examples, the second alert system 550 is configured to control the operation of the output user interface 510 responsive to the second alert information. Thus, the second alert system may be configured to provide, via the output user interface 510, a user-perceptible alert responsive to the second alert information.

In some examples, the user-perceptible alert controlled by the second alert system 550 may provide an indication of the shortest distance between the uppermost bounds of the crop volume and the interior volume. This indication may take the form of a numerical display showing the distance in appropriate units on the output user interface 510. Other examples would be apparent to the skilled person, such as a color-coded system, where different colors represent different ranges of distances.

The user-perceptible alert controlled by the second alert system may also or otherwise indicate when any predefined threshold is breached by the determined distance. For example, the alert may trigger a warning light or icon on the output user interface 510 when a threshold is crossed. Other suitable examples will be readily apparent to the skilled person.

The harvesting machine may further comprise a volume monitoring system 560 configured to monitor the rate of change of crop volume stored in the crop bin over time. This volume monitoring system may be implemented as a processing system or processing module, examples of which are later described.

The volume monitoring system may be configured to process at least the determined rate of change of crop volume, the determined crop volume and a maximum possible capacity for the crop bin to predict the length of time until the crop bin reaches full capacity.

In a simple approach, the volume monitoring system may predict this length of time by calculating the remaining available capacity (maximum capacity minus current volume) and dividing it by the current rate of change in volume. This calculation may provide an estimate of how long it will take to fill the remaining space at the current harvesting rate.

In a more complex variant, the volume monitoring system may predict this length of time by further processing historical and/or recent harvesting parameters of the harvesting machine to predict the length of time until the crop bin reaches full capacity. These harvesting parameters may include operational parameters of the harvesting machine (e.g., speed of the harvesting machine, threshing speed of the harvesting machine and so on), which influence or affect the rate of change of the crop volume in the crop bin.

In some examples, the volume monitoring system may be configured to use a desired time frame to recommend one or more harvesting parameters of the harvesting machine, such as the speed of the harvesting vehicle or the rate of crop intake. These recommendations aim to synchronize the filling of the crop bin with the end of the desired time period, thereby minimizing downtime and maximizing harvesting efficiency

For example, if the volume monitoring system predicts that at the current harvesting rate the bin will fill before the desired time, it may recommend slowing down the harvesting process (e.g., reducing a speed of the vehicle). Conversely, if the bin is filling too slowly, the system may suggest increasing the harvesting speed or adjusting other relevant parameters.

The volume monitoring system 560 may be configured to control the output user interface 510 to provide a user-perceptible output of the predicted length of time and/or (if produced) the recommended one or more harvesting parameters.

In some examples, the volume monitoring system may pass or transmit the recommended one or more harvesting parameters to a drive/harvesting control system (not illustrated) of the harvesting machine. The drive/harvesting control system may be configured to control the operation of the harvesting machine responsive to the recommendation(s), e.g., to set the maximum speed to the recommended value.

Embodiments make use of one or more processing systems, processing modules and/or other elements that may be embodied as a processing system or a processing module. Where appropriate, a single processing system may perform the function of one or more processing modules.

The skilled person will appreciate a wide variety of processing systems or processing modules capable of providing the desired functionality using software and/or hardware. In general, a processing system/module comprises one or more processing system components that co-operate to achieve the desired functionality.

As a working example, a processing system/module may be formed by a processor (e.g., comprising one or more microprocessors) that executes software/code to perform the desired functionality. However, other examples of processing systems or modules perform processing using dedicated hardware, or a combination of dedicated hardware and one or more appropriately programmed (micro)processors.

Examples of processing system components that may be employed include conventional microprocessors, digital signal processors (DSPs), application-specific integrated circuits (ASICs), field-programmable gate arrays (FPGAs), or any other suitable processing devices.

The processing system may also include memory devices, such as random access memory (RAM), read-only memory (ROM), flash memory, or other suitable memory types. These memory devices may store instructions, data, and intermediate processing results used by the processors. In some cases, the memory may be integrated with the processors, while in other implementations, it may be separate components connected via a bus or other communication channels.

It will be understood that disclosed methods are preferably computer-implemented methods. As such, there is also proposed the concept of a computer program comprising code means for implementing any described method when said program is run on a control system, such as a computer. Thus, different portions, lines or blocks of code of a computer program according to an embodiment may be executed by a control system or computer to perform any herein described method.

A computer program may be stored on a computer-readable medium, itself an embodiment of the invention. A "computer-readable medium" is any suitable mechanism or format that can store a program for later processing by a processing system. The computer readable medium can be, for example but not limited to, an electronic, magnetic, optical, electromagnetic, infrared, or semiconductor system, apparatus or device. The computer-readable medium is preferably non-transitory.

In some alternative implementations, the functions noted in the block diagram(s) or flow chart(s) may occur out of the order noted in the figures. For example, two blocks shown in succession may, in fact, be executed substantially concurrently, or the blocks may sometimes be executed in the reverse order, depending upon the functionality involved.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa. Any reference signs in the claims should not be construed as limiting the scope.

All references cited herein are incorporated herein in their entireties. If there is a conflict between definitions herein and in an incorporated reference, the definition herein shall control.

## Claims

1. A harvesting machine comprising:
a crop bin for storing harvested crop, wherein the crop bin has a variable interior shape; and
a crop volume determining system for determining a volume of crop stored by the crop bin, the crop volume determining system comprising:
a bin shape sensing arrangement configured to generate shape information that changes responsive to changes in the interior shape of the crop bin;
a crop level sensing arrangement configured to generate crop level information that changes responsive to a level of crop within the crop bin; and
a processing system configured to process the shape information and the crop level information to predict a volume of crop stored by the crop bin.

2. The harvesting machine of claim 1, wherein:
the crop bin comprises one or more side walls that move with a change in the interior shape of the crop bin; and
the shape information changes responsive to changes in the position of each side wall.

3. The harvesting machine of claim 2, wherein:
each of the one or more side walls comprises a bottom edge and a top edge, wherein each side wall is configured to pivot about the bottom edge with a change in the interior shape of the crop bin; and
the shape information changes responsive to a change in angle of each side wall.

4. The harvesting machine of claim 3, wherein the bin shape sensing arrangement comprises at least one angle sensor for monitoring the angle of each side wall.

5. The harvesting machine of any one of claims 2 to 4, wherein each of the one or more side walls is configured to change position responsive to the volume of grain stored by the crop bin.

6. The harvesting machine of any one of claims 1 to 5, wherein the crop level sensing arrangement comprises a time-of-flight sensing arrangement comprising:
a signal emitter configured to emit an acoustic and/or electromagnetic signal into crop stored by the crop bin;
a monitoring device configured to monitor for one or more echoes or responses to the acoustic and/or electromagnetic signal; and
a signal processing device configured to generate the crop level information responsive to a time difference between emission of the acoustic and/or electromagnetic signal and receipt of each of the one or more echoes or responses to the acoustic and/or electromagnetic signal.

7. The harvesting machine of claim 6, wherein the echoes or responses comprises an echo from an interface between the crop and air.

8. The harvesting machine of claim 6 or 7, wherein the time-of-flight sensing arrangement comprises:
a plurality of signal reactive devices positioned at different potential crop levels within the crop bin, wherein each signal reactive device is configured to, responsive to receiving the acoustic and/or electromagnetic signal, generate and emit a respective response signal into the crop stored by the crop bin; and
the monitoring device is configured to monitor for a response signal from each signal reactive device.

9. The harvesting machine of any one of claims 1 to 8, further comprising a first alert system configured to:
store maximum capacity information identifying a maximum possible capacity of the crop bin; and
generate first alert information responsive to a difference between the maximum possible capacity, identified by the maximum capacity information, and the predicted volume of crop stored by the crop bin.

10. The harvesting machine of any one of claims 1 to 9, further comprising a crop shape determining system configured to:
process the shape information to predict a shape of an interior volume of the crop bin; and
process the predicted shape of the interior volume of the crop bin and the predicted volume of crop stored by the crop bin to predict a shape of the crop stored by the crop bin.

11. The harvesting machine of claim 10, further comprising an acceleration recommendation system configured to process the predicted shape of the crop stored by the crop bin and the predicted shape of the interior volume of the crop bin to generate a recommended maximum acceleration and/or deceleration of the harvesting machine.

12. The harvesting machine of claim 10 or 11, wherein:
the crop shape determining system further comprises a tilt monitoring system configured to monitor a tilt of the harvesting machine; and
the crop shape determining system is configured to process the monitored tilt of the harvesting machine, the predicted shape of the interior volume of the crop bin and the predicted volume of crop stored by the crop bin to predict the shape of the crop stored by the crop bin.

13. The harvesting machine of any one of claims 10 to 12, further comprising a second alert system configured to generate second alert information responsive to a proximity of uppermost bounds of the predicted shape of the crop stored by the crop bin to uppermost bounds of the predicted shape of the interior volume of the crop bin.

14. The harvesting machine of any of claims 1 to 13, wherein the harvesting machine is a combine harvester.

15. A method for determining a volume of crop stored by the crop bin having a variable interior shape, the method comprising:
generating, using a bin capacity sensor, shape information that changes responsive to changes in the interior shape of the crop bin;
generating, using a crop level sensor, crop level information that changes responsive to a level of crop within the crop bin; and
processing the capacity information and the crop level information to predict a volume of crop stored by the crop bin.
